# EUROPEAN PATENT APPLICATION

(11) **EP 4 131 614 A1**
(43) Date of publication of application: **08.02.2023**
(21) Application number: 21837012.0
(22) Date of filing: 07.07.2021
(51) Int. Cl.: H01M 50/30, H01M 50/578, H01M 50/124, H01M 50/116, H01M 50/183, H01M 50/543

(54) **SECONDARY BATTERY INCLUDING GAS DISCHARGING PART FOR GAS DISCHARGE AND METHOD FOR MANUFACTURING SECONDARY BATTERY**

(30) Priority: 10.07.2020 KR 20200085641; 17.06.2021 KR 20210078634
(71) Applicant: LG Energy Solution, Ltd., Seoul 07335 (KR)
(72) Inventor: LIM, Hun Hee, Daejeon 34122 (KR); KIM, Sang Hun, Daejeon 34122 (KR); KANG, Min Hyeong, Daejeon 34122 (KR); YU, Hyung Kyun, Daejeon 34122 (KR)
(74) Representative: Plasseraud IP
(86) International application number: PCT/KR2021/008647
(87) International publication number: WO 2022/010256

(57) **Abstract**

The present invention relates to a secondary battery including a gas discharge portion configured to discharge only gas, whereby safety of the secondary battery is improved while performance and lifespan of the secondary battery are improved and a secondary battery manufacturing method, and more particularly to a secondary battery including an electrode assembly and a case including a receiving portion configured to receive the electrode assembly, a sealed portion formed as the result of hermetically sealing the periphery of the receiving portion, and a gas discharge portion disposed in the sealed portion, the gas discharge portion having one end disposed in contact with the receiving portion and the other end disposed in contact with the outside, the gas discharge portion configured to selectively discharge only gas.

## Description

### [Technical Field]

This application claims the benefit of priority to Korean Patent Application No. 2020-0085641 filed on July 10, 2020, the disclosure of which is incorporated herein by reference in its entirety.

This application claims the benefit of priority to Korean Patent Application No. 2021-0078634 filed on June 17, 2021, the disclosure of which is incorporated herein by reference in its entirety.

The present invention relates to a secondary battery including a gas discharge filter and a secondary battery manufacturing method, and more particularly to a secondary battery including a case having a gas discharge portion configured to selectively discharge gas in the secondary battery while interrupting introduction of moisture into the secondary battery and a secondary battery manufacturing method.

### [Background Art]

With recent diversification of devices that use batteries, demand for high-capacity and high-density batteries has increased. In particular, concern about a pouch-shaped secondary battery configured such that the thickness of an aluminum laminate sheet is reduced to obtain a high-capacity and high-density battery has increased.

The pouch-shaped secondary battery is generally formed by shaping an aluminum laminate sheet to form a receiving portion and receiving an electrode assembly including a positive electrode, a separator, and a negative electrode in the receiving portion. The aluminum laminate sheet is easily deformed and thus manufactured in various forms, whereby it is possible to form pouch-shaped secondary batteries suitable for various electronic devices. In addition, since the aluminum laminate sheet is light, unlike a conventional cylindrical secondary battery or a prismatic secondary battery, it is possible to increase energy density per weight of the pouch-shaped secondary battery.

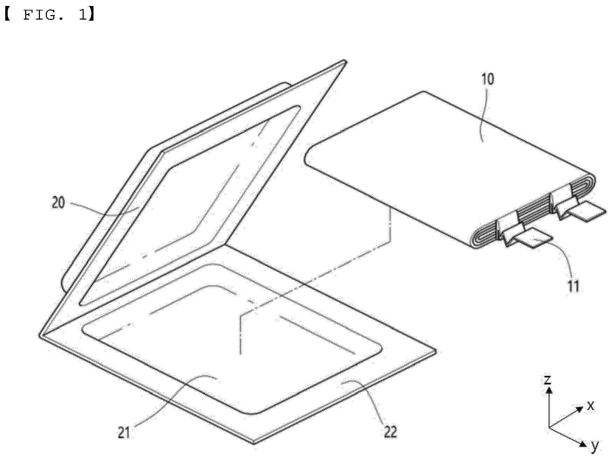

FIG. 1 is a perspective view of a conventional pouch-shaped secondary battery.

The conventional pouch-shaped secondary battery includes an electrode assembly 10 having electrode leads 11 protruding therefrom and a case 20 having a receiving portion 21 configured to receive the electrode assembly. In the pouch-shaped secondary battery, the electrode assembly 10 is received in the receiving portion 21, and the periphery of the receiving portion 21 is hermetically sealed to form a sealed portion 22. The sealed portion 22 is formed to prevent materials present in the pouch-shaped secondary battery from reacting with external air. However, a separate member capable of removing gas generated in the receiving portion is not provided. In the pouch-shaped secondary battery having the above structure, it is difficult to efficiently remove gas generated at the time of charging and discharging the secondary battery. In particular, when heat is generated due to overcharging or malfunction of the secondary battery, the case may rupture or explode, whereby noxious gases or chemicals may be discharged from the secondary battery.

In order to improve safety of the pouch-shaped case, the conventional pouch-shaped secondary battery has a material capable of removing gas contained therein or has a separate gas receiving portion in addition to the receiving portion. In the case in which the gas removal material is contained in the pouch-shaped secondary battery, however, the gas removal material disturbs operation of the pouch-shaped secondary battery, whereby efficiency of the battery is reduced. In the case in which the gas receiving portion is provided, the capacity of the battery based on the volume thereof is reduced, since the gas receiving portion has no relation to operation of the battery.

In order to solve this, Patent Document 1 discloses that a hydrogen permeation member is formed on at least a part of a metal tab lead exposed outwards from a sheathing member and the hydrogen permeation member extends from the inside to the outside of the sheathing member. In Patent Document 1, however, it is not possible to prevent permeation of moisture into a battery as the result of use of the hydrogen permeation member, whereby operation of the battery is disturbed and gases other than hydrogen are not efficiently discharged.

In Patent Document 2, an electrode lead is formed so as to have a porous structure, and a gas adsorption material is formed on the inner surfaces of pores of the electrode lead by coating. However, the gas adsorption material acts as resistance, whereby overall efficiency of the battery may be reduced.

Therefore, there is a need for a construction capable of improving safety of a battery while not reducing performance and efficiency of the battery.

### (Prior Art Documents)

(Patent Document 1) Japanese Patent Application Publication No. 2014-212034
(Patent Document 2) Korean Patent Application Publication No. 2017-0082239

### [Disclosure]

### [Technical Problem]

The present invention has been made in view of the above problems, and it is an object of the present invention to provide a pouch-shaped secondary battery having a gas discharge portion provided in a sealed portion thereof, the gas discharge portion being configured to selectively discharge only gas, whereby gas is efficiently discharged while no moisture permeates from the outside, and therefore safety of the battery is improved while performance of the battery is maintained.

It is another object of the present invention to provide a secondary battery manufacturing method capable of hermetically sealing the gas discharge portion, a case, and an electrode lead together, whereby it is possible to manufacture a secondary battery configured such that the case is hermetically sealed very well, and therefore a battery defect rate is low while gas discharge is easily achieved.

### [Technical Solution]

In order to accomplish the above objects, a secondary battery according to the present invention includes a pouch-shaped case having a receiving portion configured to receive an electrode assembly, a sealed portion formed as the result of hermetically sealing the periphery of the receiving portion, and a gas discharge portion disposed in the sealed portion, the gas discharge portion having one end disposed in contact with the receiving portion and the other end disposed in contact with the outside, the gas discharge portion configured to selectively discharge only gas.

The gas discharge portion may be made of a gas discharge material having a higher gas permeability than a moisture permeability.

The gas discharge material may have an annual moisture permeability of 50 ppm or less.

The gas discharge material may be polypropylene (PP), polytetrafluoroethylene (PTFE), polyethylene (PE), polyethylene tetraphthalate (PET), or a mixture thereof.

The gas discharge portion may have a thickness of 100 um to 600 µm.

The gas discharge portion may wrap an electrode lead protruding outwards from the electrode assembly.

The pouch-shaped case may include a laminate sheet, and contact portions of the gas discharge portion and the laminate sheet may be coated with polypropylene.

The secondary battery according to the present invention includes the pouch-shaped case and an electrode assembly. The present invention provides a secondary battery manufacturing method including (S1) applying a gas discharge material having a higher gas permeability than a moisture permeability to at least a part of the surface of an electrode lead of an electrode assembly; and (S2) receiving the electrode assembly in a receiving portion formed in a pouch-shaped case having a gas discharge portion and then hermetically sealing the case.

In the secondary battery manufacturing method according to the present invention, the gas discharge material may include polypropylene (PP), polytetrafluoroethylene (PTFE), polyethylene (PE), polyethylene tetraphthalate (PET), or a mixture thereof.

In the secondary battery manufacturing method according to the present invention, in step S2, the gas discharge material and the pouch-shaped case may be coupled to each other by thermal fusion performed at least once to ten times.

In the secondary battery manufacturing method according to the present invention, the gas discharge portion may undergo a surface reforming process.

In the secondary battery manufacturing method according to the present invention, the gas discharge portion may have a thickness of 100 um to 600 µm.

In the present invention, one or more constructions that do not conflict with each other may be selected and combined from among the above constructions.

### [Advantageous Effects]

A secondary battery according to the present invention includes a gas discharge portion capable of selectively discharging only gas, whereby gas is efficiently discharged from the secondary battery, and therefore safety of the secondary battery is improved while performance of the secondary battery is maintained.

In addition, the amount of moisture that permeates into the secondary battery is small, and safety of the secondary battery is maintained even though a large number of electrode assemblies are received in the secondary battery, whereby performance and lifespan characteristics of the secondary are improved, compared to a conventional battery.

Furthermore, sealing force of the secondary battery is also improved even though the secondary battery is manufactured using a simple method, whereby a battery defect rate is reduced and secondary battery manufacturing cost is also reduced.

### [Description of Drawings]

FIG. 1 is a perspective view of a conventional pouch-shaped secondary battery.
FIG. 2 is a perspective view of a pouch-shaped secondary battery according to the present invention.
FIG. 3 is a sectional view of a first embodiment of the pouch-shaped secondary battery according to the present invention.
FIG. 4 is a sectional view of a second embodiment of the pouch-shaped secondary battery according to the present invention.
FIG. 5 is a graph showing comparison in moisture permeability between the case in which polypropylene was used for a gas discharge portion according to the present invention and the case in which no gas discharge portion was provided.
FIG. 6 is a graph showing comparison in gas permeability between the case in which polypropylene was used for a gas discharge portion according to the present invention and the case in which no gas discharge portion was provided.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a secondary battery and a secondary battery manufacturing method according to the present invention will be described in detail with reference to the accompanying drawings.

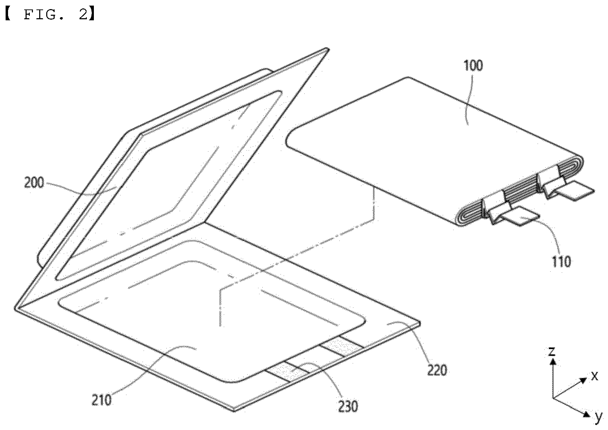

FIG. 2 is a perspective view of a pouch-shaped secondary battery according to the present invention.

The pouch-shaped secondary battery according to the present invention includes an electrode assembly 100 having electrode leads 110 protruding therefrom and a case 200 including a receiving portion 210 configured to receive the electrode assembly 100, a sealed portion 220 formed as the result of hermetically sealing the periphery of the receiving portion 210, and a gas discharge portion 230 disposed in the sealed portion 220, the gas discharge portion having one end disposed in contact with the receiving portion 210 and the other end disposed in contact with the outside, the gas discharge portion being configured to selectively discharge only gas.

The electrode assembly 100 may be a jelly-roll type assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type assembly, which is configured to have a structure in which unit cells are wound using a long separation film, or a laminated and stacked type assembly, which is configured to have a structure in which unit cells are stacked in the state in which a separator is interposed therebetween and are then attached to each other. However, the present invention is not limited thereto. It is preferable for the electrode assembly according to the present invention to have a stacked and folded type structure or a laminated and stacked type structure, which has the lowest physical stress when a curved module is formed.

The electrode leads 110 may be configured to have a structure in which the electrode leads are exposed out of the case after positive electrode tabs and negative electrode tabs of the electrode assembly 100 are electrically connected to the electrode leads or a structure in which the electrode leads 110 directly connect the electrode assembly 100 to the outside of the case 200 without positive electrode tabs and negative electrode tabs. However, the present invention is not limited thereto. The secondary battery described above is generally known, and therefore a more detailed description thereof will be omitted.

The case 200 is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical-physical properties, such as tensile strength, rigidity, surface hardness, and resistance to impact strength, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is light and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air permeation such that the outer layer exhibits high heat resistance and chemical resistance while protecting the electrode assembly. As an example, the outer layer may be made of nylon or polyethylene terephthalate. However, the present invention is not limited thereto.

The receiving portion 210 may be formed in each of the upper part and the lower part of the case 200, or may be formed in any one of the upper part and the lower part of the case. It is more preferable for the receiving portion to be formed in any one of the upper part and the lower part of the case, since it is possible to reduce a surplus space of a terraced portion.

In addition, the outside surface of the receiving portion 210 is hermetically sealed in order to prevent a material in the receiving portion 210 from being discharged from the case 200. At this time, a sealed portion 220 formed as the result of hermetically sealing is bent in a direction toward the receiving portion 210 in order to increase energy density of a battery module. At this time, the terraced portion, which is a part of the sealing portion 220 and from which the electrode leads 110 protrude in one direction or in opposite directions, is formed so as to protrude from the receiving portion 210.

The gas discharge portion 230 may be located at the sealed portion 220. The gas discharge portion 230 may be located at any part of the sealed portion 220. As an example, the gas discharge portion 230 may be disposed at the part at which the electrode leads 100 are located, as shown in FIG. 2.

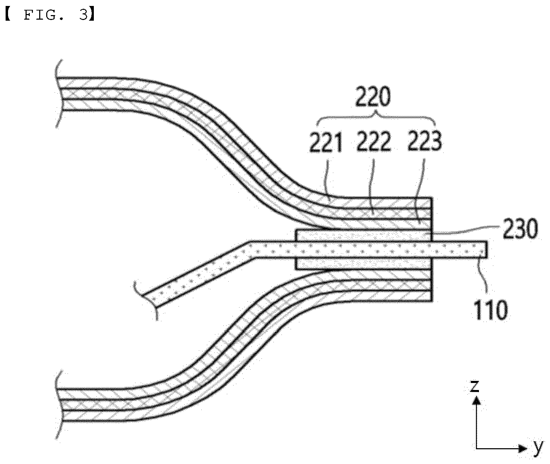

FIG. 3 is a sectional view of a first embodiment of the pouch-shaped secondary battery according to the present invention.

In the first embodiment of the pouch-shaped secondary battery according to the present invention, a material constituting the gas discharge portion 230 may be applied to the sealed portion 220 of the case 200, i.e. the laminate sheet, so as to be coupled to the electrode lead 110. In this structure, it is possible to secure a gas discharge path while increasing force of coupling between the gas discharge portion 230 and the sealed portion 220.

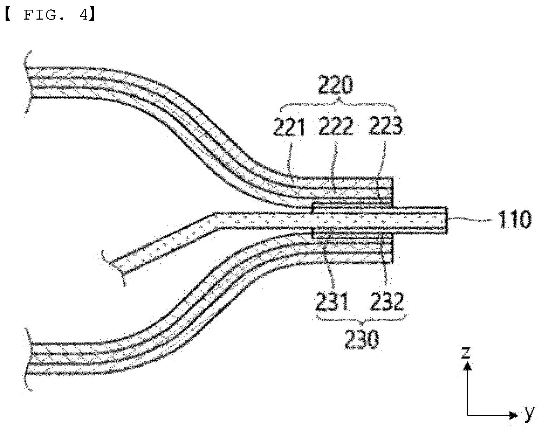

FIG. 4 is a sectional view of a second embodiment of the pouch-shaped secondary battery according to the present invention.

In the gas discharge portion 230 according to the first embodiment shown in FIG. 3, a material constituting the gas discharge portion 230 may be applied to the surface of the electrode lead 110 so as to be coupled to the electrode lead, and may then be coupled to the case 200. As a result, it is possible to reduce a space in which the electrode lead 110 is formed, i.e. an unsealed portion, while smooth movement of gas discharged through the gas discharge portion 230 is achieved. At this time, the gas discharge portion 230 may serve to couple the electrode lead 100 and the sealed portion 220 to each other between the electrode lead 100 and the sealed portion 220. In order to increase a coupling force with the case 200, which is made of a laminate sheet, specifically an inner layer 221 of the sealed portion 220 constituted by an outer layer 221, a metal layer 222, and the inner layer 221, the gas discharge portion 230 may be provided with a gas penetration portion 231 located at a facing surface of the electrode lead 110 and a coating portion 232 located at a facing surface of the inner layer 22 to increase coupling force.

The gas penetration portion 231 may include at least one of a fluorine-based polymer, an olefin-based polymer, an acrylic-based polymer, and ceramics. In order to increase performance of fusion with a lead metal located at the lower end thereof, a lead metal adhesive surface of the gas penetration portion may be treated with maleic anhydride, or may be chemically treated for formation of an -OH (hydroxyl) group. This is advantageous in increasing force of coupling between two materials to be coupled. The gas penetration portion 231 may include a layer including pores configured to allow gas permeation therethrough in a horizontal direction.

The coating portion 232 may be directly formed on the gas discharge portion 230 by coating, or may be formed on the inner layer 221 by coating so as to be coupled to the gas discharge portion 230. The coating portion 232 may be made of a material that exhibits high coupling force with both a material constituting the gas discharge portion 230 and a material constituting the inner layer 221. As an example, the coating portion 232 may be made of polypropylene. In the present invention, the thickness of the coating portion 232 may be 50 um to 500 um. The thickness of the coating portion 232 may be reduced by heat and pressure at the time of fusion with the pouch. If the thickness of the coating portion is too small, sealing strength may be reduced. Sealing between the sealed portion 220 and the electrode lead 110 is further improved by the provision of the coating portion 232.

The gas discharge portion 230 may be made of a gas discharge material that is stable under secondary battery operation conditions and that has higher gas permeability than moisture permeability. The gas discharge material may be a material that has an annual moisture permeability of 50 ppm or less.

As an example, the gas discharge material may be polypropylene, polytetrafluoroethylene, polyethylene, polyethylene tetraphthalate, or a mixture thereof. Polypropylene, polyvinylidene difluoride, polytetrafluoroethylene, polyethylene, polyethylene tetraphthalate, or a mixture thereof has properties capable of inhibiting moisture permeation while discharging gas, such as carbon dioxide, methane, or ethane, whereby operation of a lithium ion battery is stably maintained while gas mainly generated in the battery is discharged. In consideration of force of coupling with the laminate sheet, it is more preferable to use polypropylene or polyvinylidene difluoride, which has higher force of coupling with the laminate sheet and is more easily sealable than other materials.

The thickness of the gas permeation portion 230 may be 100 um to 600 um. If the thickness of the gas permeation portion 230 is less than 100 µm, the amount of gas that passes through the gas permeation portion 230 is limited, whereby a desired gas discharge effect may not be obtained. If the thickness of the gas permeation portion 230 is greater than 600 µm, the gas permeation portion 230 is excessively thick, whereby the thickness of the secondary battery may be increased, and desired sealing force may not be obtained.

A secondary battery according to the present invention may include (S1) a step of applying a gas discharge material that has higher gas permeability than moisture permeability to at least a part of the surface of an electrode lead of an electrode assembly and (S2) a step of receiving the electrode assembly in a receiving portion formed in a case made of a laminate sheet and then hermetically sealing the case.

At this time, in step S1, the gas discharge material may be applied to the case instead of the surface of the electrode lead. The position at which the gas discharge material is applied may be changed depending on coupling force and sealing force of the gas discharge material.

For example, the gas discharge material may be polypropylene (PP), polytetrafluoroethylene (PTFE), polyethylene (PE), polyethylene tetraphthalate (PET), or a mixture thereof. Thereamong, polypropylene has high coupling force with the electrode lead and the case, i.e. the laminate sheet, and may be disposed at any part of a sealed portion of the case. For polytetrafluoroethylene, however, much time and high temperature are necessary for sealing. Consequently, it is preferable for polytetrafluoroethylene to be disposed at the part of the sealed portion through which the electrode lead penetrates in order to prevent reduction in overall sealing force of the secondary battery.

In step S2, the gas discharge material and the case may be coupled to each other by thermal fusion performed at least once to ten times. Thermal fusion number and time may be changed depending on properties of the gas discharge material and force of coupling of the gas discharge material with the electrode lead and the case. The thermal fusion method may be a pressurization method of applying a force of 1 kg/mm to 100 kg/mm while applying a heat of 150°C to 250°C. If pressurization is performed at a temperature higher than the above temperature range, the electrode assembly and the case may be damaged. If fusion is performed at a temperature lower than the above temperature range, the adhesive material may not be sufficiently melted. In addition, if pressurization force is excessively high, the electrode lead may be damaged. If the pressurization force is low, sealing force may be reduced, and therefore the pouch-shaped secondary battery may be damaged even when the battery is normally operated. At this time, the thermal fusion method may be performed using a laser instead of heat.

In addition to thermal fusion, the laminate sheet used as the case or the electrode lead may be immersed in a solution constituted by the gas discharge material so as to be coated. Examples of the immersion method may include spin coating, slot-die coating, doctor blade coating, bar coating, and dipping.

The surface of the gas discharge portion may be reformed in order to increase force of coupling with the electrode lead or the case. The surface reforming process may be performed using ultraviolet hardening or plasma.

In addition, the thickness of the gas discharge portion may be 100 um to 600 um. If the thickness of the gas discharge portion is too small, it is difficult to smoothly discharge gas while moisture permeates. If the thickness of the gas discharge portion is too large, moisture easily permeates due to the thickness of the gas discharge portion, whereby performance of the battery is reduced.

### <Experimental Example 1>

A dummy cell having neither an electrode nor a separator was formed so as to have a shape according to Example 1 of the present invention. At this time, polypropylene having a thickness of 100 um was formed on a gas discharge portion by coating.

### <Experimental Example 2>

This is identical to Experimental Example 1 except that polypropylene having a thickness of 200 um was formed on a gas discharge portion by coating, and other description thereof will be omitted.

### <Comparative Example 1>

This is identical to Experimental Example 1 except that a gas discharge portion was not coated, and other description thereof will be omitted.

### Moisture permeation measurement method

In order to measure permeation of moisture into the dummy cell, moisture permeation speed was measured in an accelerated manner in a high-temperature, high-humidity environment, and after accelerated storage, some of a solution in a hermetically sealed container was extracted, and was titrated using a titrator for measurement. In order to measure force of permeation of moisture into the dummy cell, samples were put in a chamber set to have a high-temperature, high-humidity condition (60°C and RH 90%), and change in moisture permeation for 1 week was measured. At this time, the content of moisture permeated into a secondary battery was measured through an increase in concentration of HF formed depending on reaction of an electrolytic solution. For moisture permeability in the present invention, when moisture permeates into the secondary battery in a moisture permeation acceleration environment for 16 weeks, HF 0.1g in the secondary battery corresponds to a moisture (H₂O) permeation of 500 ppm over 10 years.

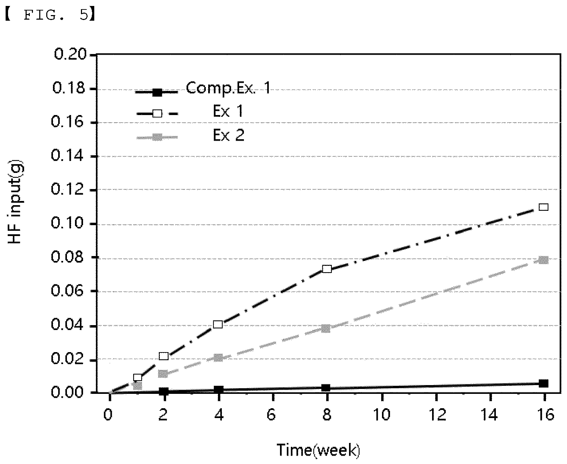

FIG. 5 is a graph showing comparison in moisture permeability between the case in which polypropylene was used for the gas discharge portion according to the present invention and the case in which no gas discharge portion was provided. As can be seen from FIG. 5, moisture permeability of each of Experimental Example 1 (Ex. 1) and Experimental Example 2 (Ex. 2) according to the present invention was higher than moisture permeability of Comparative Example 1 (Comp. Ex. 1). This is caused due to characteristics of a pouch-shaped case that is not hermetically sealed, and some moisture may permeate. When comparing Experimental Example 1 and Experimental Example 2 with each other, however, it can be seen that moisture permeability is reduce when the thickness of the gas discharge portion is increased. That is, it is possible to adjust the discharge amount of gas within an allowable moisture range by the provision of the gas discharge portion. Polypropylene (PP), polytetrafluoroethylene (PTFE), polyethylene (PE), polyethylene tetraphthalate (PET), or a mixture thereof used in the present invention has lower moisture permeability and larger gas discharge amount than other materials. As the thickness of the gas discharge portion is increased, therefore, the gas discharge amount is increased while the moisture discharge amount is decreased.

### <Second Experimental Example 1>

A change in pressure in a pouch-shaped secondary battery having polypropylene having a thickness of 100 um (Second Experimental Example 1, Ex. 1) formed on a gas discharge portion according to the present invention was measured for 24 hours.

### <Second Comparative Example 1>

This is identical to Second Experimental Example 1 except that a pouch-shaped secondary battery having no gas discharge portion was a target, and other description thereof will be omitted.

At this time, carbon dioxide mainly generated in a secondary battery was artificially injected into the pouch-shaped secondary battery from the outside. At this time, about 0.0161 atm of carbon dioxide was injected for 20 hours.

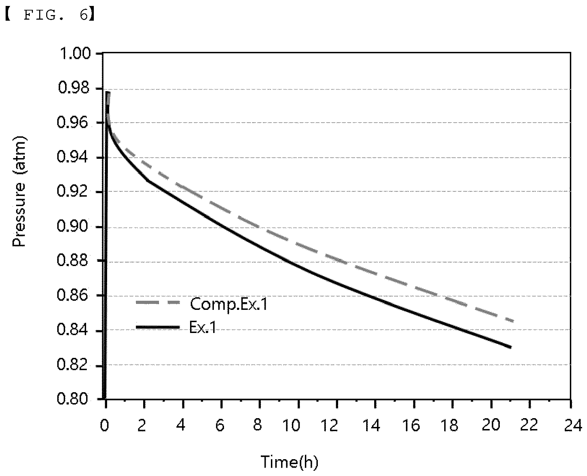

FIG. 6 is a graph showing comparison in gas permeability between the case in which polypropylene having a thickness of 100 um was used for the gas discharge portion according to the present invention andthe case in which no gas discharge portion was provided.As can be seen from FIG. 7, Second Experimental Example 1 (Ex. 1) had a larger gas discharge amount than Second Comparative Example 1 (Comp. Ex. 1), whereby pressure in the pouch-shaped secondary battery was reduced.

As described above, it can be seen that, in the case in which a material capable of selectively discharge only gas, i.e. a material that has higher gas permeability than moisture permeability, is used for the gas discharge portion according to the present invention, it is possible to more smoothly discharge gas.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and technical idea of the present invention, and it will be obvious that such changes and modifications fall within the scope of the appended claims.

### (Description of Reference Numerals)

10, 100: Electrode assemblies
11, 110: Electrode leads
20, 200: Cases
21, 210: Receiving portions
22, 220: Sealed portions
221: Outer layer
222: Metal layer
221: Inner layer
230: Gas discharge portion
231: Gas penetration portion
232: Coating portion

## Claims

1. A pouch-shaped case comprising:
a receiving portion configured to receive an electrode assembly;
a sealed portion formed as a result of hermetically sealing a periphery of the receiving portion; and
a gas discharge portion disposed in the sealed portion, the gas discharge portion having one end disposed in contact with the receiving portion and the other end disposed in contact with an outside, the gas discharge portion configured to selectively discharge only gas.

2. The pouch-shaped case according to claim 1, wherein the gas discharge portion is made of a gas discharge material having a higher gas permeability than a moisture permeability.

3. The pouch-shaped case according to claim 2, wherein the gas discharge material has an annual moisture permeability of 50 ppm or less.

4. The pouch-shaped case according to claim 3, wherein the gas discharge material comprises polypropylene (PP), polytetrafluoroethylene (PTFE), polyethylene (PE), polyethylene tetraphthalate (PET), or a mixture thereof.

5. The pouch-shaped case according to claim 1, wherein the gas discharge portion has a thickness of 100 um to 600 µm.

6. The pouch-shaped case according to claim 1, wherein the gas discharge portion wraps an electrode lead protruding outwards from the electrode assembly.

7. The pouch-shaped case according to claim 1, wherein
the pouch-shaped case comprises a laminate sheet, and
contact portions of the gas discharge portion and the laminate sheet are coated with polypropylene.

8. A secondary battery comprising:
the pouch-shaped case according to any one of claims 1 to 7; and
an electrode assembly.

9. A secondary battery manufacturing method comprising:
(S1) applying a gas discharge material having a higher gas permeability than a moisture permeability to at least a part of a surface of an electrode lead of an electrode assembly; and
(S2) receiving the electrode assembly in a receiving portion formed in a pouch-shaped case having a gas discharge portion and then hermetically sealing the case.

10. The secondary battery manufacturing method according to claim 9, wherein the gas discharge material comprises polypropylene (PP), polytetrafluoroethylene (PTFE), polyethylene (PE), polyethylene tetraphthalate (PET), or a mixture thereof.

11. The secondary battery manufacturing method according to claim 9, wherein, in step S2, the gas discharge material and the pouch-shaped case are coupled to each other by thermal fusion performed at least once to ten times.

12. The secondary battery manufacturing method according to claim 9, wherein the gas discharge portion undergoes a surface reforming process.

13. The secondary battery manufacturing method according to claim 9, wherein the gas discharge portion has a thickness of 100 um to 600 um.
